# EUROPÄISCHE PATENTANMELDUNG

(11) **EP 2 538 377 A2**
(43) Veröffentlichungstag der Anmeldung: **26.12.2012**
(21) Anmeldenummer: 12004589.3
(22) Anmeldetag: 19.06.2012
(51) Int. Cl.: G06Q 10/06, G06Q 10/08

(54) **Verfahren zur Abwickung von Kanban-Aufrägen und RFID-Palettenbox**

(30) Priorität: 21.06.2011 DE 102011114612
(71) Anmelder: Würth Industrie Service GmbH & Co. KG, 97980 Bad Mergentheim (DE)
(72) Erfinder: Ehrmann, Heiko, 74653 Ingelfingen (DE); Schmidt, Steffen, 74564 Crailsheim (DE); Thomas, Manfred, 97285 Röttingen (DE); Ruckwied, Ulrich, 74081 Heilbronn-Horkheim (DE)
(74) Vertreter: Lenzing Gerber Stute

(57) **Zusammenfassung**

Die Erfindung betrifft ein Verfahren zur Abwicklung von Bestellvorgängen im Rahmen einer Auftragsabwicklung in der Kleinteilelieferung zwischen einem Anbieter und einem Kunden, wobei mit Kleinteilen gefüllte Behälter von dem Anbieter an eine Entnahmestelle geliefert werden und von dem Kunden entleerte Behälter wieder zurückgegeben werden, und wobei diese Behälter mit in einem Lesevorgang auslesbaren RFID-Tags ausgerüstet sind, die Daten über den Behälter enthalten, wobei Boxen zur Aufnahme und zum Transport einer Mehrzahl von Behältern vorgesehen sind, und der Lesevorgang nach dem Einstellen eines leeren Behälters dadurch ausgelöst wird, dass eine Tür oder ein Deckel der Box geschlossen wird.

## Beschreibung

Die vorliegende Erfindung betrifft ein Verfahren mit den Merkmalen des Oberbegriffs des Anspruchs 1 und eine Vorrichtung mit den Merkmalen des Oberbegriffs des Anspruchs 7.

### Technischer Hintergrund

Kanban-Lösungen von Anbietern helfen, Versorgungssicherheit zu gewährleisten, Lagerbestände und Wiederbeschaffungszeiten zu reduzieren oder den gesamten Beschaffungsprozess im Rahmen eines Outsourcingprojektes abzuwickeln. Logistische und dispositive Dienstleistungen sowie scannerunterstützte Regalsysteme oder eine Justin-time-Versorgung mittels Kanban-Behältersystemen bis hin zu Ship-to-Line Angeboten leisten dabei einen entscheidenden Beitrag zur Produktivitätssteigerung der Kunden. Als Waren, für die solche Systeme geeignet sind, kommen zum Beispiel Kleinteile für Montagen und Verbrauchsmaterial in Frage.

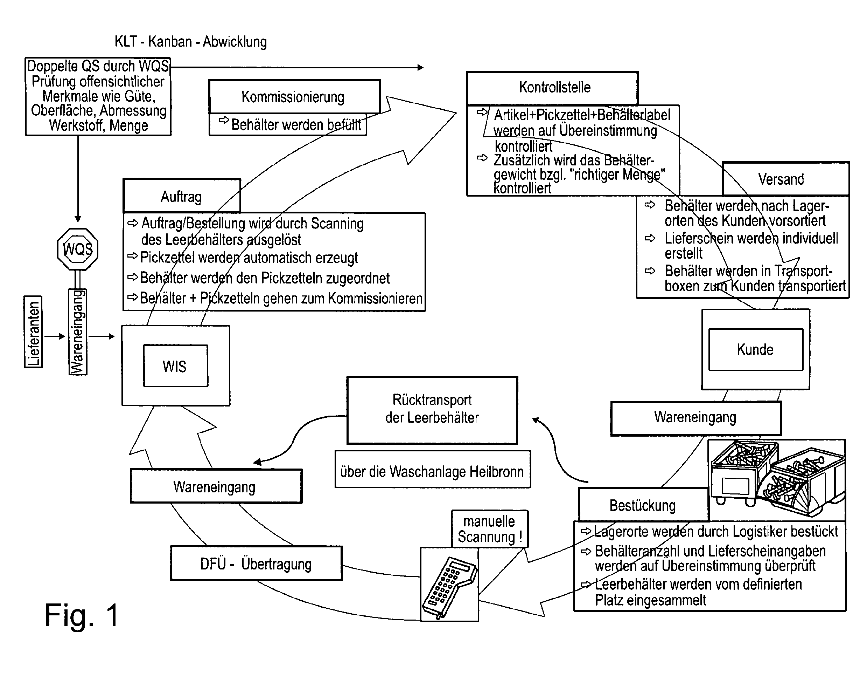

Die Abwicklung eines Auftrages nach dem Kanban-Prinzip ist beispielhaft in der Figur 1 veranschaulicht.

### Stand der Technik

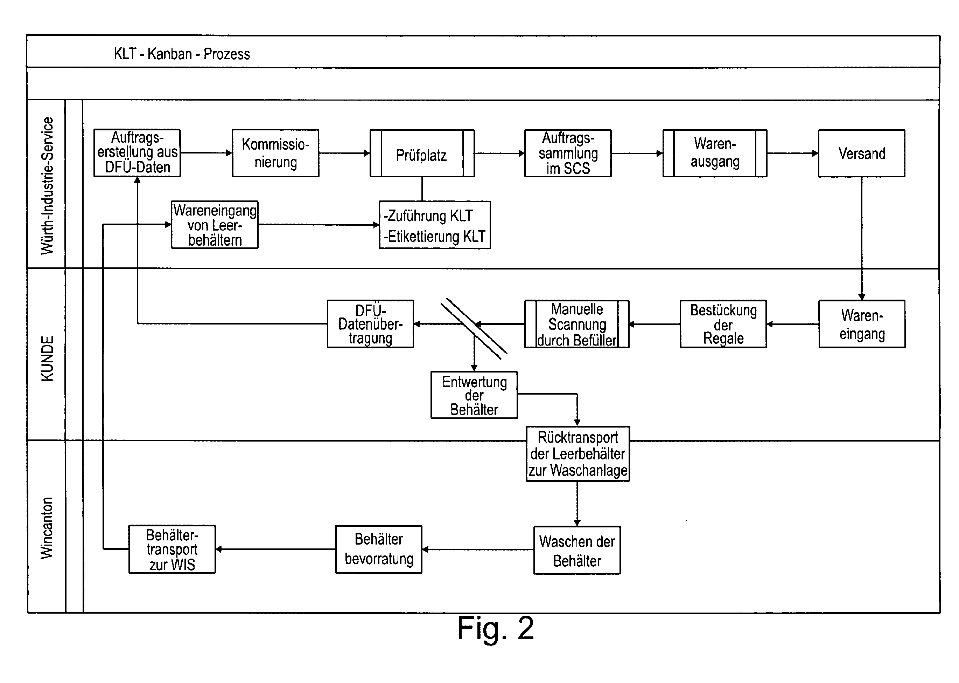

Die Abwicklung der einzelnen Verfahrensschritte bei einem System mit manuell zu scannenden Barcodes, die zur Identifizierung der Behälter eingesetzt werden, ist beispielhaft in der Figur 2 dargestellt. Die einzelnen Behälter werden auch "Kleinladungsträger" (KLT) genannt. Neben der Verwendung von Barcodes, die im allgemeinen manuell gescannt werden müssen, ist auch die Verwendung von RFID-Sytemen zur Erkennung von Kanban-Behältern bekannt.

Ein RFID-System besteht aus Transpondern (Funkkommunikationsgerät), die sich an den zu identifizierenden Gegenständen befinden und einem Lesegerät zum Erfassen der Transponder.

Verschiedene RFID-Techniken unterscheiden sich durch die genutzte Frequenz und die damit verbunden physikalischen Eigenschaften.

Ein passiver Transponder versorgt sich mit Energie aus den Funksignalen des Abfragegeräts (Induktion).

Ein aktiver Transponder verfügt über eine eigene Energieversorgung (Batterie oder Anschluss an einer Stromversorgung). Der Transponder befindet sich meist im Ruhezustand und sendet keine Informationen aktiv aus, bevor er durch ein spezielles Aktivierungssignal aktiviert wird. Dadurch wird die Lebensdauer auf mehrere Jahre erhöht. Der die Vorteile der aktiven Transponder liegen unter anderem an einer größeren Kommunikationsreichweite, aber auch die Verwaltung größerer Datenmengen. Der Transponder beantwortet die empfangenen Signale auf einer vorgegebenen Frequenz und leitet dies an einen Empfänger weiter.

Wenn man mehrere RFID-Etiketten, im folgenden "Tags" genannt, bei der sogenannten Pulkerfassung auf einmal auslesen möchte, kann es zu Problemen kommen, da nicht alle Tags gleichzeitig gelesen werden können. Dies liegt unter anderem daran, dass normalerweise ein Tag nur genau einmal ausgelesen werden sollte, sich aber auf eine entsprechende Anforderung des Lesegeräts (nachfolgend: Reader) alle Tags bei dem gleichen Reader melden und nach dem ersten Auslesen der Tag in einen sogenannten Ruhezustand verfällt, d.h. das Lesefeld ruht.

Es ist bekannt, passive RFID-Tags in die lesbaren und/oder mit Barcode versehenen Etiketten zu integrieren.

Es ist ebenfalls bekannt, aktive RFID-Tags an Behältern anzubringen. Hierbei wird bei einem bekannten System an der Behälterrückseite ein aktiver RFID-Tag angebracht. Durch das Drehen des Behälter und durch Drücken eines Knopfes am Tag wird die Bestellung ausgelöst und mittels einer Funktechnologie an den Anbieter und Betreiber des Systems übermittelt.

Aus einer anderen Anwendung ist es bekannt, den Behälter an seiner Vorderseite mit einem RFID-Tag zu versehen. Durch das Drücken eines Knopfes am Tag wird auch hierbei die Bestellung ausgelöst und mittels einer Funktechnologie an den Betreiber übermittelt.

Diese Systeme sind fehleranfällig, weil der Bestellvorgang manuell ausgelöst werden muss.

Weiter ist ein System bekannt, das passive RFID-Etiketten verwendet. Die leeren Behälter werden auf den dafür vorgesehen Platz im Regal gestellt. Die Behälter in diesem Regalplatz werden erfasst, wodurch die Bestellung der Nachlieferung ausgelöst wird. Da ebenfalls in dem Regalfachboden ein RFID-Reader und Antennen integriert sind, erfolgt dann die Bestellauslösung und somit die Übermittlung an das System des Anbieters. Hierbei kommt es in der Praxis zu Problemen, wenn die Behälter nicht wie vorgesehen in das Regal eingestellt werden, beispielsweise nicht vollständig in das Fach geschoben werden, oder wenn leere Behälter wieder entnommen werden.

Die bekannten Systeme sind in der Handhabung aufwändig und bei Fehlbedienung fehleranfällig.

### Aufgabe

Es ist deshalb Aufgabe der Erfindung, ein RFID-gestütztes System für eine Kleinbehälterlogistik zur Verfügung zu stellen, das einfacher und zuverlässiger arbeitet.

Diese Aufgabe wird von einem Verfahren mit den Merkmalen des Anspruchs 1 und mittels eines Behälters mit den Merkmalen des Anspruchs 7 gelöst.

Weil bei einem Verfahren zur Abwicklung von Bestellvorgängen im Rahmen einer Auftragsabwicklung in der Kleinteilelieferung zwischen einem Anbieter und einem Kunden, wobei mit Kleinteilen gefüllte Behälter von dem Anbieter an eine Entnahmestelle geliefert werden und von dem Kunden entleerte Behälter wieder zurückgegeben werden, und wobei diese Behälter mit in einem Lesevorgang auslesbaren RFID-Tags ausgerüstet sind, die Daten über den Behälter enthalten, zusätzlich Boxen zur Aufnahme und zum Transport einer Mehrzahl von Behältern vorgesehen sind, und weil der Lesevorgang nach dem Einstellen eines leeren Behälters dadurch ausgelöst wird, dass eine Tür oder ein Deckel der Box geschlossen wird, werden Lesefehler durch unvollständiges Einstellen der Behälter ausgeschlossen.

Weil bei einer Box zur Aufnahme und zum Transport einer Mehrzahl von Behältern, mit einer Bodenwand, Seitenwänden und einem Deckel, die einen Innenraum umschließen, wobei der Innenraum durch eine Tür oder einen Deckel zugänglich ist, weiter vorgesehen ist, dass die Box einen RFID-Reader aufweist, der in einem Lesevorgang eventuell in der Box vorhandene RFID-Tags auslesen kann und der derart mit der Tür oder dem Deckel gekoppelt ist, dass der Lesevorgang durch Schließen der Tür oder des Deckels auslösbar ist, werden Lesefehler durch unvollständiges Einstellen der Behälter ausgeschlossen.

Weitere vorteilhafte Merkmale der Erfindung ergeben sich aus den abhängigen Ansprüchen.

Nachfolgend werden der Stand der Technik und ein Ausführungsbeispiel der vorliegenden Erfindung anhand der Zeichnung näher beschrieben. Es zeigen:
- Fig. 1:: ein bekanntes Verfahren zur Abwicklung eines Kanban-Verfahrens zwischen einem Anbieter und Lieferanten und einem Kunden und Abnehmer mittels Kleinladungsträgern (KLT);
- Fig. 2:: das Verfahren aus Fig. 1 in einer Blockdarstellung;

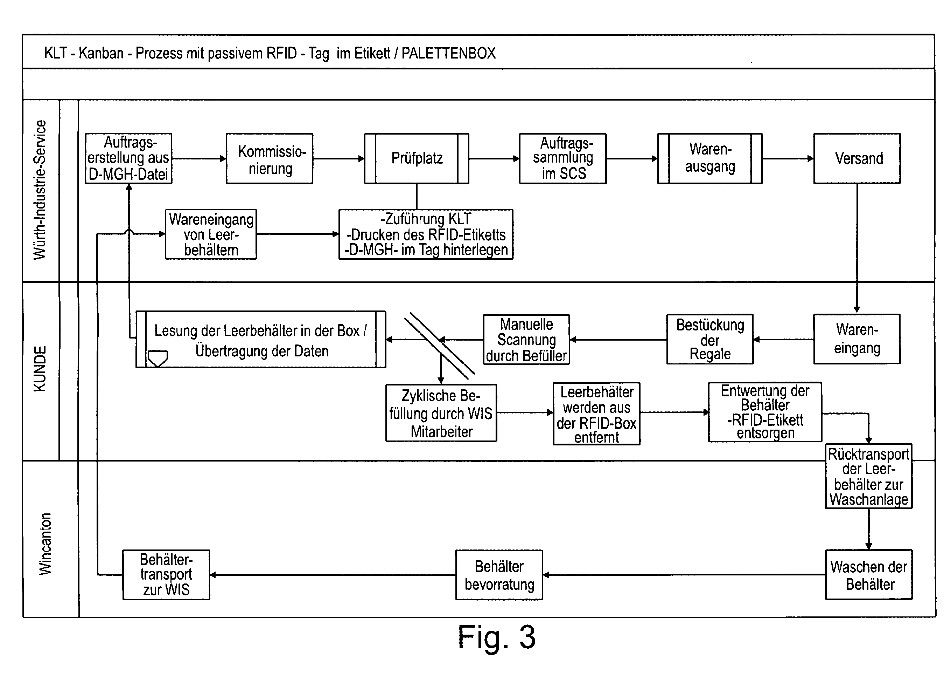

- Fig. 3:: ein erfindungsgemäßes Verfahren, bei dem die leeren KLT-Behälter in eine Box gegeben werden und dort identifiziert werden, wodurch die Datenübertragung und Bestellung ausgelöst wird;

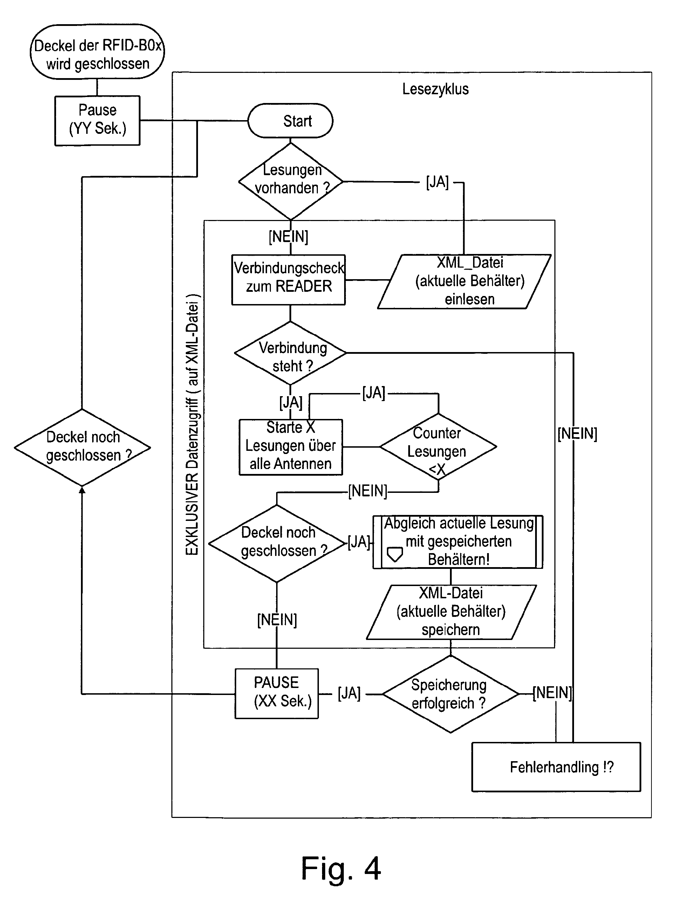

- Fig. 4:: ein Ablaufschema eines Lesezyklus in dem erfindungsgemäßen Verfahren;

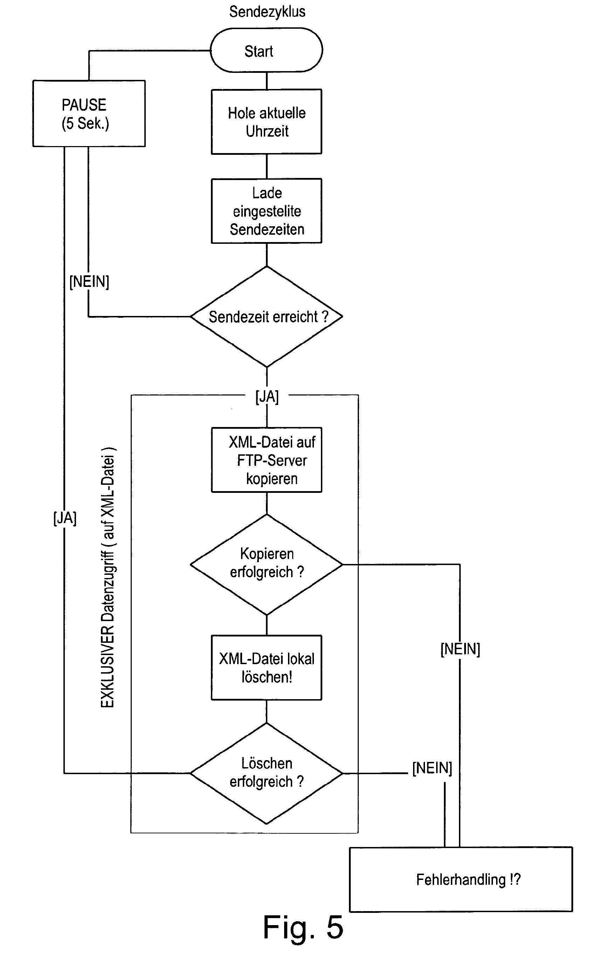

- Fig. 5:: ein Ablaufschema der Datenübertragung von der Box zu einem Zentralrechner Lesezyklus in dem erfindungsgemäßen Verfahren;

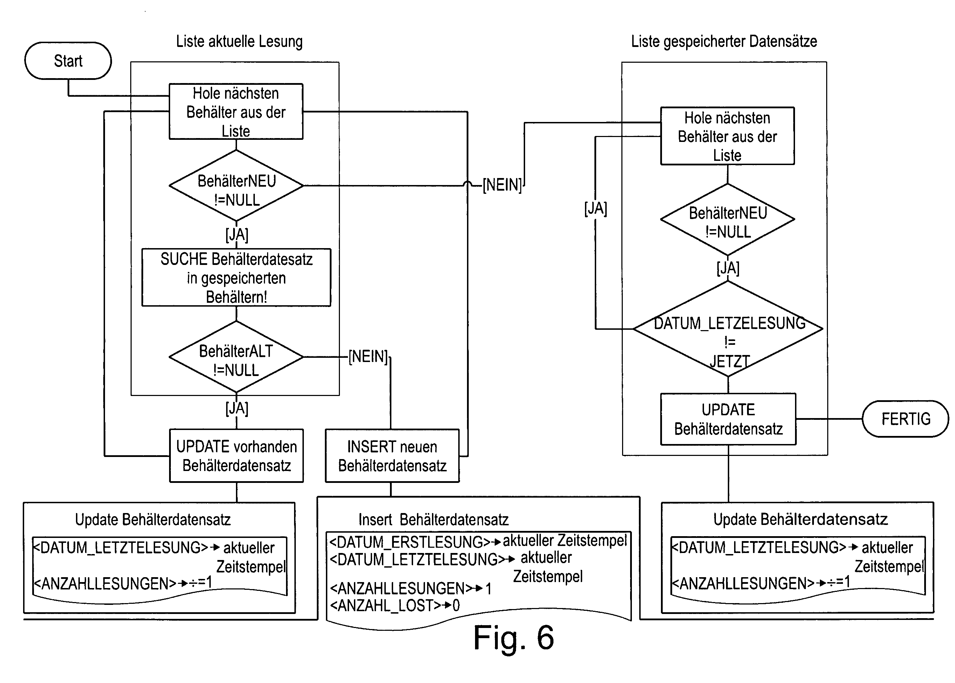

- Fig. 6:: ein Ablaufschema für den Abgleich der bereits von der Box erfassten KLT-Behälter mit dem Ergebnis eines neuen Lesezyklus in dem erfindungsgemäßen Verfahren;

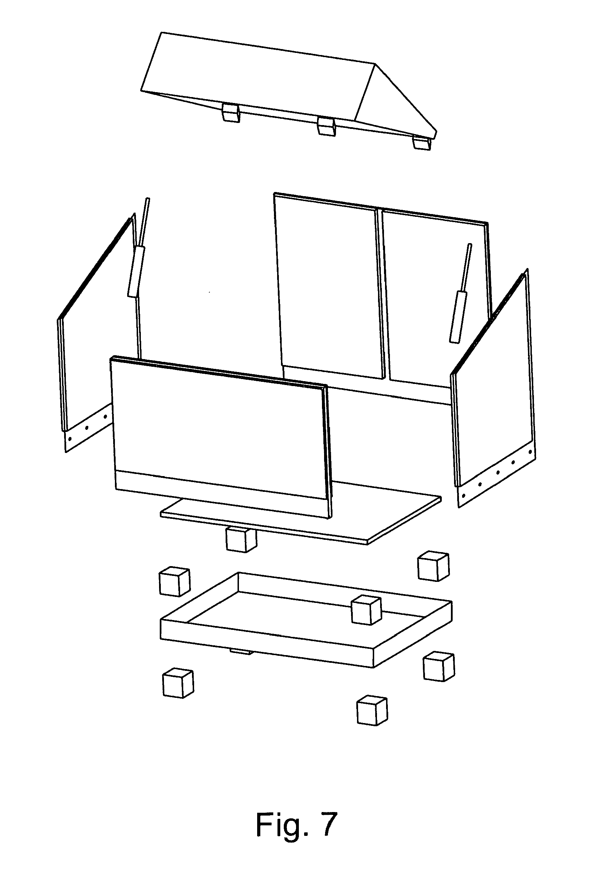

- Fig. 7:: eine erfindungsgemäße RFID-Box in einer Explosionsdarstellung; sowie
- Fig. 8:: die Anordnung der technischen Komponenten im Bodenbereich der RFID-Box gem. Fig. 7.

### Abwicklung des neuen Verfahrens mit RFID

Durch die RFID-Technologie kann die Bestellauslösung durch einen permanenten Datenaustausch schneller bzw. in Echtzeit in das ERP-System des Anbieters, auch Kanban- Managementsystem genannt, eingespielt werden. Darüber hinaus muss keine manuelle Datenerfassung vorgenommen werden und somit wird ein Risiko über ein "menschliches Versagen" verringert. Der Anbieter kann die Daten sofort nutzen und Bestände reservieren bzw. sofort eine neue Lieferung veranlassen. Darüber hinaus erkennt man sofort, ob derzeit Bedarfsschwankungen vorliegen und kann dies ebenfalls in die Planung und weitere Bearbeitung mit einbeziehen.

### Abwicklung des neuen Verfahrens mit der RFID-Palettenbox

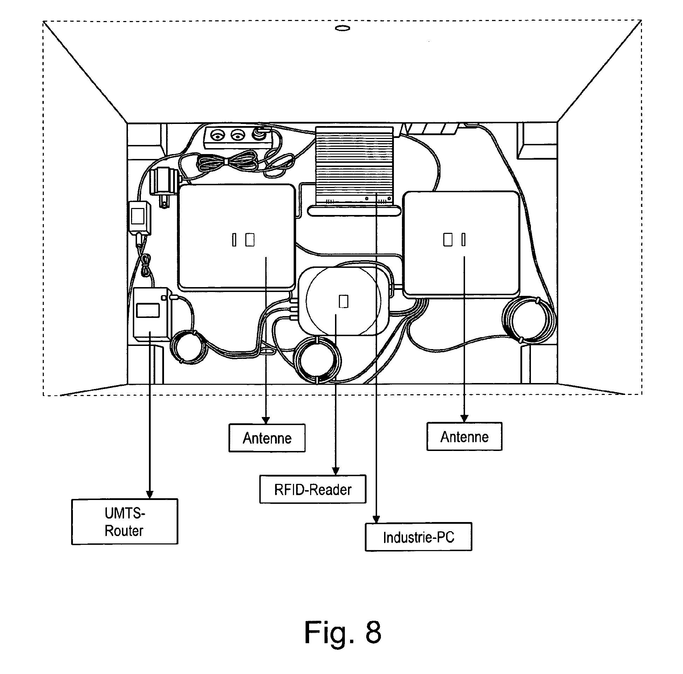

Der KLT-Behälter ist durch das Behälteretikett mit einem RFID-Tag ausgestattet. Wenn ein Behälter leer wird, stellt der Kunde diesen ebenfalls auf einen vordefinierten Platz, in dem Falle die mit einem Deckel oder einer Tür versehene RFID-Palettenbox. Die Palettenbox ist mit der notwendigen, in Fig. 8 näher dargestellten Technik ausgestattet, die eine sofortige Übertragung der Behälterdaten in das ERP-System sicher stellt.

Dabei wird das Lesen des oder der RFID-Tags nur dann ausgelöst, wenn nach dem Einstellen der Behälter die Tür oder der Deckel der Box geschlossen wird. So ist sicher gestellt, dass die Behälter während des Lesevorgangs nicht bewegt und nicht wieder entnommen werden. Solange der Deckel oder die Tür der Box geschlossen ist, kann der Reader auch eine Pulkerfassung durchführen, bei der alle in der Box vorhandenen Behälter nacheinander abgefragt werden können. So wird eine vollständige Erfassung der Behälter gewährleistet.

### Vorteile gegenüber den anderen bekannten Systemen

Es erfolgt eine absolut sichere Pulkerfassung, d.h. es können mehrere Behälter auch übereinander gestapelt in die Box gestellt werden und es erfolgt dennoch eine sichere Auslesung der Daten. Andere Systeme müssen aufwendig abgeschirmt werden, so dass keine Lesung frühzeitig erfolgt (bspw. im Regal). Dies ist bei bekannten Systemen auch bedingt durch die mögliche Beeinflussung RF-Strahlung durchin der Nähe befindliche Metallteile, welche eine Erfassung stören können. Darüber hinaus ist nur ein Stellplatz für die Box erforderlich, und diese kann bis zu 70 Behälter einer üblichen Größe aufnehmen.

### RFID-Palettenbox

Bestandteil des Systems ist eine Vorrichtung, in der die Behälter abgestellt oder abgelegt werden können und die den Lesevorgang durchführt. Diese Vorrichtung kann als Box mit einem verschließbaren Deckel oder einer verschließbaren Tür ausgeführt sein. Bei einer solchen Vorrichtung kann der Lesevorgang dann beispielsweise durch Schließen der Tür oder des Deckels ausgelöst werden.

Die gesamte Technik der Datenverarbeitung ist im Boden integriert und wird mit einer Abdeckung vor Staub und Schmutz geschützt.

Die Technik umfasst in diesem Ausführungsbeispiel einen Computer (Industrie-PC), einen RFID-Reader, zwei RFID-Antennen sowie ein UMTS-Mobilfunkmodul.

Bei dieser Box ist gem. Fig. 8 beispielhaft vorgesehen, dass im Innern zwei Stapel von KLT-Behältern abgestellt werden können. Zentral unter jedem Stapel ist jeweils eine RFID-Antenne vorgesehen, so dass jeder Stapel im Wege einer Pulkerfassung oder Pulklesung separat mit besonders guten Übertragungseigenschaften angesprochen werden kann.

Der Industrie-PC ist ein herkömmlicher PC und kann somit Funktionen eines Standard-PC ausführen. In dem Zusammenhang mit der RFID-Box wird dieser zum Abgleich der Daten genutzt, d.h. der Anbieter kann die aktuellen Daten, wie z.B. Anzahl und vorgesehener Inhalt von leeren Behältern, abfragen, ist aber auch im Stande Daten zurück zu senden.

Dadurch ist zum Beispiel eine Softwarewartung auch als Fernwartung möglich. Darüber hinaus kann der Anbieter auch Daten über den kompletten Lagerort für den Kunden aufbereiten.

Über eine Anzeige, die als Touchscreen-Monitor im Deckel integriert sein kann, erhält der Kunde eine Information, welche Behälter sich im Inneren der Box befinden und somit auch, was an den Anbieter als Bestellung übermittel wurde. Er kann allerdings auch nachvollziehen, was aktuell noch an Bestand an den jeweiligen Lagerorten liegt.

## Patentansprüche

1. Verfahren zur Abwicklung von Bestellvorgängen im Rahmen einer Auftragsabwicklung in der Kleinteilelieferung zwischen einem Anbieter und einem Kunden, wobei mit Kleinteilen gefüllte Behälter von dem Anbieter an eine Entnahmestelle geliefert werden und von dem Kunden entleerte Behälter wieder zurückgegeben werden, und wobei diese Behälter mit in einem Lesevorgang auslesbaren RFID-Tags ausgerüstet sind, die Daten über den Behälter enthalten, **dadurch gekennzeichnet, dass** Boxen zur Aufnahme und zum Transport einer Mehrzahl von Behältern vorgesehen sind, und dass der Lesevorgang nach dem Einstellen eines leeren Behälters dadurch ausgelöst wird, dass eine Tür oder ein Deckel der Box geschlossen wird.

2. Verfahren nach Anspruch 1, **dadurch gekennzeichnet, dass** das RFID-Tag ein passives RFID-Tag ist.

3. Verfahren nach einem der vorhergehenden Ansprüche, **dadurch gekennzeichnet, dass** das Auslesen des RFID-Tags nach jedem schließen der Tür oder des Deckels erfolgt.

4. Verfahren nach einem der vorhergehenden Ansprüche, **dadurch gekennzeichnet, dass** alle in der Box vorhandenen Behälter nacheinander durch Auslesen der RFID-Tags erfasst werden.

5. Verfahren nach einem der vorhergehenden Ansprüche, **dadurch gekennzeichnet, dass** nach Hinzufügen eines Behälters zu einer bereits teilgefüllten Box der gesamte Inhalt der Box neu erfasst wird und dass ein Abgleich mit der zuvor erfassten Information über die Behälter erfolgt.

6. Verfahren nach einem der vorhergehenden Ansprüche, **dadurch gekennzeichnet, dass** das Auslesen der RFID-Tags nach dem Schließen der Tür oder des Deckels erst nach Ablauf einer voreingestellten Wartezeit erfolgt.

7. Box zur Aufnahme und zum Transport einer Mehrzahl von Behältern, mit einer Bodenwand, Seitenwänden und einem Deckel, die einen Innenraum umschließen, wobei der Innenraum durch eine Tür oder einen Deckel zugänglich ist, **dadurch gekennzeichnet, dass** die Box einen RFID-Reader aufweist, der in einem Lesevorgang eventuell in der Box vorhandene RFID-Tags auslesen kann und der derart mit der Tür oder dem Deckel gekoppelt ist, dass der Lesevorgang durch Schließen der Tür oder des Deckels auslösbar ist.

8. Box nach Anspruch 7, **dadurch gekennzeichnet, dass** die Box zur Aufnahme von mehreren Stapeln von Behältern eingerichtet ist, wobei unter jedem Stapel jeweils eine RFID-Antenne vorgesehen ist.

9. Box nach einem der vorhergehenden Ansprüche, **dadurch gekennzeichnet, dass** ein Zwischenraum unterhalb des Bodens des Innenraums vorgesehen ist, der den RFID-Reader, die RFID-Antennen sowie einen Computer und ein Mobilfunkmodul enthält.

10. Box nach Anspruch 9, **dadurch gekennzeichnet, dass** zur Bedienung des Computers eine Bedieneinheit, vorzugsweise ein Touchscreen-Monitor, in dem Deckel der Box angeordnet ist.
